# EUROPEAN PATENT APPLICATION

(11) **EP 3 402 068 A1**
(43) Date of publication of application: **14.11.2018**
(21) Application number: 16852883.4
(22) Date of filing: 18.11.2016
(51) Int. Cl.: H02S 20/00

(54) **AQUATIC PHOTOVOLTAIC SYSTEM**

(30) Priority: 04.01.2016 CN 201620006138 U
(71) Applicant: BOE Technology Group Co., Ltd., Beijing 100015 (CN); Beijing Boe Energy Technology Co., Ltd., Beijing 100176 (CN)
(72) Inventor: GENG, Xiaoda, Beijing 100176 (CN); HAN, Xiaoyan, Beijing 100176 (CN); SONG, Xingbin, Beijing 100176 (CN)
(74) Representative: Jacobacci Coralis Harle
(86) International application number: PCT/CN2016/106418
(87) International publication number: WO 2017/118228

(57) **Abstract**

Embodiment of the present disclosure provides a waterborne photovoltaic system, comprising a photovoltaic module, a photovoltaic support and a suspension device, wherein the photovoltaic module is secured to the photovoltaic support, the photovoltaic support is secured to the suspension device, the suspension device comprises a plurality of floating members, and each of the floating members comprises a plurality of floats.

## Description

### Technical Field

Embodiments of the present disclosure relate to the field of photovoltaic technology, and in particular to a waterborne photovoltaic system.

### Background

Solar resources with their large amount, wide distribution and other characteristics have become renewable resources with the most development value. At present, photovoltaic power plants are generally built in sparsely populated mountains or deserts, or built on the roofs of buildings or other land. Due to the scarcity of land resources, there have been photovoltaic systems built on water, known as waterborne photovoltaic systems. At present, the support of the a waterborne photovoltaic system has a fixed installation. For example, a reinforced concrete structure is poured on the bottom of the water, and the photovoltaic support, the photovoltaic module etc. are installed on the reinforced concrete structure. As the waterborne photovoltaic system has a high requirement on water resources, it needs to be installed in an area with a shallow depth, bring about construction inconvenience and high cost.

### Summary

According to an embodiment of the present disclosure, there is provided a waterborne photovoltaic system, comprising a photovoltaic module, a photovoltaic support and a suspension device, wherein the photovoltaic module is secured to the photovoltaic support, the photovoltaic support is secured to the suspension device, the suspension device comprises a plurality of floating members, and each of the floating members comprises a plurality of floats connected in pairs.

In some embodiments, each of the floating members comprises two floats connected in pairs.

In some embodiments, the plurality of floating members are substantially the same in size and shape.

In some embodiments, each of the floats is a cube.

In some embodiments, each of the floats has dimensions of about 500 mm × 500 mm × 400 mm.

In some embodiments, each of the floats is provided with connecting bolts at its edges for connecting adjacent floats together.

In some embodiments, the photovoltaic support is secured to the floating member by connecting bolts.

In some embodiments, the waterborne photovoltaic system further comprises a corridor integrated with the suspension device, the corridor being implemented by increasing the number of the floats.

In some embodiments, the waterborne photovoltaic system further comprises a guard rail mounted on the outer side of the corridor.

In some embodiments, the waterborne photovoltaic system further comprises a profile holder for connecting the photovoltaic support and the floating member together.

In some embodiments, the profile holder is a planar, integral profile holder.

In some embodiments, the waterborne photovoltaic system further comprises a securing device for securing the waterborne photovoltaic system to a designated location on a water surface.

In some embodiments, the securing device is a winch chain, the winch chain being connected to the floats.

Advantages of the waterborne photovoltaic system according to embodiments of the present disclosure include: photovoltaic power generation can be performed utilizing water surfaces, without the need to occupy land, so that the land resources can be saved; the structure is simple and the cost is low; it is easy to expand and easy to form photovoltaic systems with various scales and sizes.

### Description of Drawings

Figure 1 is a schematic diagram of a waterborne photovoltaic system according to an embodiment of the present disclosure;
Figure 2 illustrates a floating member according to an embodiment of the present disclosure;
Figure 3 is a top view of a waterborne photovoltaic system according to an embodiment of the present disclosure;
Figure 4 is a schematic diagram of a waterborne photovoltaic system according to a further embodiment of the present disclosure.

### Detailed Description of Specific Embodiments

In order to provide better understanding of the technical solution of the present disclosure to those skilled in the art, the waterborne photovoltaic system provided in embodiments of the present disclosure is now described in further detail with reference to the accompanying drawings and specific embodiments thereof. Obviously, the described embodiments are part of the present disclosure. All other embodiments obtained by one of ordinary skill in the art without the need for creative work based on the described embodiments of the present disclosure are within the scope of the present disclosure.

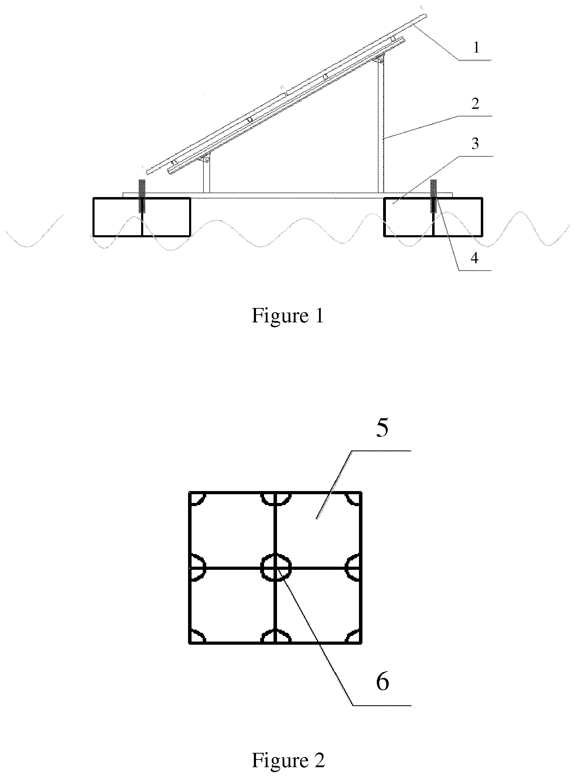

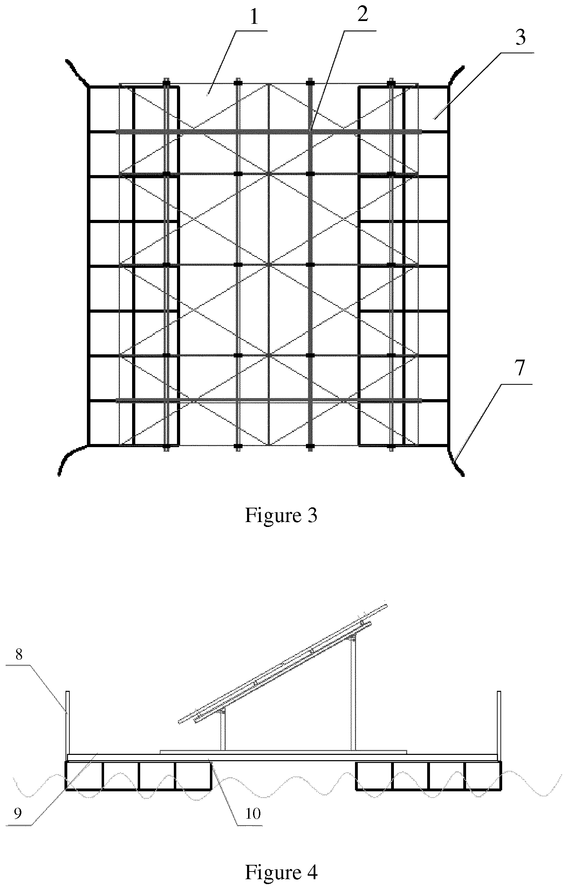

Referring to Figures 1-4, wherein Figure 1 is a schematic view of a waterborne photovoltaic system according to an embodiment of the present disclosure; Figure 2 illustrates a floating member according to an embodiment of the present disclosure; Figure 3 is a top view of a waterborne photovoltaic system according to an embodiment of the present disclosure; Figure 4 is a schematic view of a waterborne photovoltaic system according to a further embodiment of the present disclosure.

As shown in Figures 1-3, the waterborne photovoltaic system comprises a photovoltaic module 1, a photovoltaic support 2 and a suspension device, the photovoltaic module 1 is secured to the photovoltaic support 2, the photovoltaic support 2 is secured to a suspension device, and the suspension device can be suspended on the water surface.

The suspension device is composed of a plurality of floating members 5, and the plurality of floating members 5 can be increased and decreased in number and be arranged as needed. For example, each of the floating members 5 may be composed of a plurality of floats 3, and may be arranged to increase or decrease the number of the floats 3 as needed.

In some embodiments, each of the floating members 5 has substantially the same shape and substantially the same size.

The type of the photovoltaic module 1 is not limited, either crystalline silicon or amorphous silicon; either a flexible cell panel or a non-flexible cell panel, either framed one or frameless. And the size and the installed number of the photovoltaic cell panels is not limited. In order to better illustrate the waterborne photovoltaic system provided herein, an exemplary embodiment of the present disclosure employs a photovoltaic module with a photovoltaic cell panel having the conventional dimensions of 1650 × 990 × 40 mm, and 245 wp.

The type of the photovoltaic support 2 is not limited. The photovoltaic support 2 may be designed according to the type of the photovoltaic module 1 or according to need, and the photovoltaic support 2 may also has a tracking system. The photovoltaic modules 1 may be mounted on the photovoltaic support 2 in any suitable manner known in the art or developed in the future.

The photovoltaic support 2 can be secured to the floating members 5 by the connection bolts 4. The connecting bolts 4 may be of any suitable number, type, size and shape.

Each of the floating members 5 may be composed of a plurality of floats 3. For example, each of the floating members 5 is composed of four floats 3. Each of the four edges or four corners of each float 3 may be provided with a connecting bolt 4, by which the floats can be combined together, or combined with an external structure, for example, a photovoltaic support 2. That is, in the exemplary embodiment of the present disclosure, the floating member 5 is formed by connecting together four floats 3 in pairs, and then the floating member 5 is connected to the photovoltaic support 2 by connecting bolts 4 at the connection 6 between the floating member 5 and the photovoltaic support 2.

The number and combination manner of the floating members 5 are not limited and can be designed according to the weight of the photovoltaic module 1 and the photovoltaic support 2. In addition, the type, number and combination manner of the floats 3 are not limited.

The present disclosure may be implemented using some common components or products, but is not limited thereto. In an exemplary embodiment of the present disclosure, the floating member 5 may be composed of standard floats. The standard float may be a common float on the market, for example being a cube having dimensions 500×500×400 mm. The material of the float may be, for example, a high molecular polyethylene. A connecting bolt 4 may be provided at each of the four corners of each float, and the floats may be joined together or joined with an external structure by means of the connecting bolts 4. The carrying capacity of such a standard float can be, for example, 350 kg / m². According to this exemplary embodiment of the present disclosure, the four standard floats can be combined together in pairs to form a floating member 5. According to the size of the standard float, it can be seen that the carrying capacity of each floating member 5 is 350 kg. Thus, the buoyancy of the suspension device may be calculated to be larger than the weight of the photovoltaic module 1 and the photovoltaic support 2 in accordance with the weight of the photovoltaic module 1 and the photovoltaic support 2 in order to allow the entire waterborne photovoltaic system to float on the water surface, thus determining the number of the floating members 5 that should be included in the suspension device.

According to an exemplary embodiment of the present disclosure, since the float material is a high molecular polyethylene, which has a service life of more than 15 years, has the advantages of impact resistance, climate change resistance, oxidation resistance, corrosion resistance, and ultraviolet resistance, etc., is not eroded by sea water, oil and aquatic organisms, and has no pollution to water quality. More importantly, the waterborne photovoltaic system provided by an exemplary embodiment of the present disclosure is simple in structure, convenient in construction and inexpensive as compared to conventional waterborne photovoltaic systems with underwater poured concrete structures.

According to a further embodiment of the present disclosure, the waterborne photovoltaic system further comprises a waterborne photovoltaic system securing device 7 through which the entire waterborne photovoltaic system is secured to a designated location on the water surface. The type of the waterborne photovoltaic system securing device 7 is not limited. For example, a block of cement mass may be immersed in the bottom of the water, or a winch chain may be connected to the connecting bolts 4 on the floats 3, or other securing means such as prefabricated piles may be used.

Referring now to Fig. 4, according to a further embodiment of the present disclosure, it is possible to construct a corridor 9 which is integrated with the suspension device and which allows the maintenance personnel to pass through to facilitate the maintenance of the photovoltaic system at a later stage by increasing the number of the floats 3. In addition, a safety guard rail 8 can be built on the outer side of the corridor.

In addition, according to a further embodiment of the present disclosure, in order to increase the stability of the entire system for cases where the water surface condition is not very good, such as windy, wavy, etc., a planar, integral profile holder 10 may be made using standard profiles or the like, by welding, laping, etc. The photovoltaic support 2 and the floating members 5 can be connected together by the profile holder 10 to greatly improve the stability of the entire waterborne photovoltaic system.

In summary, in the waterborne photovoltaic system according to embodiments of the present disclosure, the photovoltaic module etc. are floated on the water surface by means of the floating members, thus it has no pollution to the water resources, but can be widely used in fish ponds, lakes and similar environments. More importantly, the waterborne photovoltaic system provided by the present invention has a simple overall structure, a strong expansibility, a size and scale that can be changed arbitrarily, a convenient construction process, a low cost, and a wide range of applications.

It is to be understood that the above embodiments are merely illustrative embodiments for the purpose of illustrating the principles of the present disclosure and are not intended to be limited thereto. It will be apparent to those skilled in the art that various changes and modifications can be made therein without departing from the spirit and substance of the present disclosure, which are also intended to be within the scope of the present disclosure. The scope of protection of the present disclosure is limited only by the language expression of the appended claims and equivalents thereof.

## Claims

1. A waterborne photovoltaic system, comprising a photovoltaic module, a photovoltaic support and a suspension device, wherein the photovoltaic module is secured to the photovoltaic support, the photovoltaic support is secured to the suspension device, the suspension device comprises a plurality of floating members, and each of the floating members comprises a plurality of floats connected in pairs.

2. The waterborne photovoltaic system of claim 1, wherein each of the floating members comprises two floats connected in pairs.

3. The waterborne photovoltaic system of claim 1, wherein the plurality of floating members are substantially the same in size and shape.

4. The waterborne photovoltaic system of claim 1, wherein each of the floats is a cube.

5. The waterborne photovoltaic system of claim 1, wherein each of the floats has dimensions of about 500 mm × 500 mm × 400 mm.

6. The waterborne photovoltaic system of claim 1, wherein each of the floats is provided with connecting bolts at its edges for connecting adjacent floats together.

7. The waterborne photovoltaic system according to claim 1, wherein the photovoltaic support is secured to the floating members by connecting bolts.

8. The waterborne photovoltaic system of claim 1, further comprising a corridor integrated with the suspension device, the corridor being implemented by increasing the number of the floats.

9. The waterborne photovoltaic system of claim 8, further comprising a guard rail mounted on the outer side of the corridor.

10. The waterborne photovoltaic system of claim 1, further comprising a profile holder for connecting the photovoltaic support and the floating members together.

11. The waterborne photovoltaic system of claim 10, wherein the profile holder is a planar, integral profile holder.

12. The waterborne photovoltaic system of claim 1, further comprising a securing device for securing the waterborne photovoltaic system to a designated location on a water surface.

13. The waterborne photovoltaic system of claim 12, wherein the securing device is a winch chain, the winch chain being connected to the floats.
